# EUROPÄISCHE PATENTSCHRIFT

(11) **EP 3 959 432 B1**
(45) Veröffentlichungstag und Bekanntmachung des Hinweises auf die Patenterteilung: **11.12.2024**
(21) Anmeldenummer: 20716075.5
(22) Anmeldetag: 10.03.2020
(51) Int. Cl.: F02M 26/28, F01P 3/04, F02M 26/30, F02M 26/32, F02M 26/41

(54) **BRENNKRAFTMASCHINE MIT ABGASRÜCKFÜHRUNG**
INTERNAL COMBUSTION ENGINE WITH EXHAUST GAS RECIRCULATION
MOTEUR À COMBUSTION INTERNE AVEC RECIRCULATION DE GAZ D'ÉCHAPPEMENT

(30) Priorität: 25.04.2019 DE 102019002998
(43) Veröffentlichungstag der Anmeldung: 02.03.2022
(73) Patentinhaber: DEUTZ Aktiengesellschaft, 51149 Köln (DE)
(72) Erfinder: KLOSTERBERG, Johannes, 53913 Swisttal (DE); SLIWA, Marco, 53721 Siegburg (DE); KURT, Tobias, 41539 Dormagen (DE); SCHMITZ, Oliver, 50354 Hürth (DE)
(86) Internationale Anmeldenummer: PCT/EP2020/000058
(87) Internationale Veröffentlichungsnummer: WO 2020/216465

(56) Entgegenhaltungen:
- EP-A1- 2 063 097
- EP-A1- 3 073 089
- DE-A1- 102004 015 487

## Beschreibung

Aus der DE 691 30 976 T2 ist eine Brennkraftmaschine bekannt. Diese Brennkraftmaschine weist ein Abgasrückführsystem mit einer Verteilleitung auf, die parallel zu einer Frischgasleitung verläuft. Die Frischgasleitung weist abzweigende Frischgaskanäle auf, die zu den jeweils zwei Einlassventilen einer Zylindereinheit führen. In die Frischgaskanäle mündet die Verteilleitung mit einzelnen Einspeiseleitungen ein. Bei bekannten Ab- gasrückführ (AGR)-Kühlern wird der Kühler des Motors quer durchströmt und befindet sich dabei in einer Art Tasche direkt im Kurbelgehäuse des Motors ohne eigenes Gehäuse. Die Querdurchströmung erlaubt es, dass aufgrund des großen durchströmten Querschnittes die gesamte Wassermenge des Motors dem AGR-Kühler zur Verfügung gestellt wird. Auch erfährt das Wasser im Gegensatz zur Längsdurchströmung einen deutlich geringeren Temperaturanstiegt. Diese Anordnung ist aufgrund ihrer Funktionsweise ideal hinsichtlich Kühlwirkung und wasserseitigem Druckverlust.

Das Problem bei derartigen Anordnungen ist, dass der AGR-Kühlereinsatz durch die Kontur der Wassertasche im Kurbelgehäuse nicht vollständig umschlossen wird. Somit fließt sehr viel Wasser um den AGR-Kühler herum, was die Strömungsgeschwindigkeiten durch die Kühlerlamellen reduziert und somit die Kühlwirkung mindert.

Ferner ist aus der EP 3 073 089 A1 eine Brennkraftmaschine mit mindestens einem Kühler bekannt, der einen Abgaseinlass zum Kühler und eine integrierte Abgasdurchführung aufweist. Der Kühler ist in einem inneren Kühlabschnitt des Kurbelgehäuses angeordnet, wobei nasenartige Erhebungen mit einem Kühlergehäuse zusammenwirken, um eine turbulente Strömung des Kühlmittels zu gewährleisten, das um oder zwischen den nasenartigen Erhebungen und dem Kühlergehäuse fließt.

Aus der EP 2 063 097 A1 ist eine Brennkraftmaschine bekannt, die Folgendes umfasst: ein Zylindergehäuseelement mit einer Wandstruktur, die mindestens einen Zylinderraum definiert, und einem Kühlfluidmantel zum Kühlen des Zylindergehäuseelements; und einen Gaskanal, der sich zumindest teilweise innerhalb des Zylindergehäuseelements erstreckt, so dass der Kühlfluidmantel die Temperatur eines Gases im Gaskanal reduziert.

Aus der DE 10 2004 015 487 A1 ist eine Brennkraftmaschine mit einem Kurbelgehäuse und einem Zylinderkopf bekannt, an dem eine Abgassammelleitung und eine Frischgasleitung befestigt sind, wobei die Abgassammelleitung und die Frischgasleitung über eine Abgasrückführleitung mit in die Abgasrückführleitung eingeschalteten Abgasrückführsteuerventil und Abgaskühler, bestehend aus einer Abgaskühlleitung und einem Kühlgehäuse, verbunden sind, wobei das Kühlgehäuse zumindest in einem Teilbereich integraler Bestandteil des Kurbelgehäuses ist.

Die im Folgenden beschriebene Erfindung befasst sich mit diesem Problem. Ziel war es, das Wasser durch den Kühler zu leiten und die Leckage- Verluste zu minimieren. Gleichzeitig sollte die Lösung möglichst ohne Zusatzkosten bei Fertigung und Montage umgesetzt werden können.

Der Erfindung liegt die Aufgabe zugrunde, den Anbau der Abgasrückführeinrichtung, insbesondere der Verteilleitung, an die Brennkraftmaschine zu vereinfachen und die Kühlwirkung zu verbessern.

Diese Aufgabe wird durch eine Brennkraftmaschine mit den Merkmalen gemäß Patentanspruch 1 und durch ein Verfahren mit den Merkmalen gemäß Anspruch 6 gelöst.

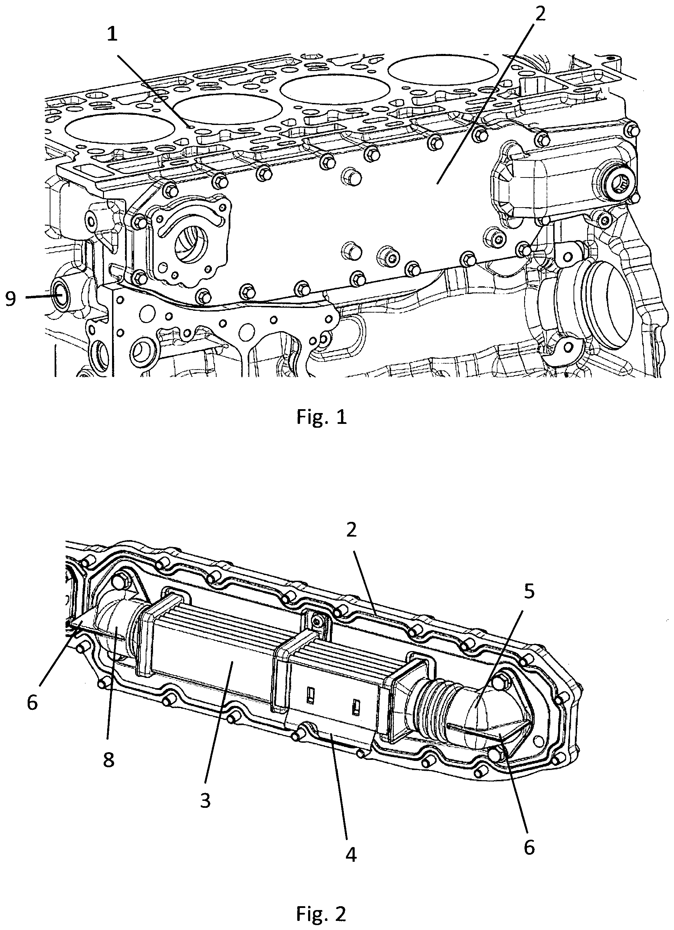

Zum einen werden an den Eintrittsstutzen des AGR-Kühlers Gussfinnen angebracht, zum anderem in der Kurbelgehäusetasche Gussrippen eingefügt. Die Gussrippen im Kurbelgehäuse werden bis auf einen kleinen Spalt an die Gussfinnen des AGR-Kühlers herangeführt, wie dies in Fig. 1 offenbart wird. Auf diese Weise wird der Leckagequerschnitt bis auf den verbleibenden Spalt stark reduziert. Um die toleranzbedingte Varianz der Spaltbreite und damit der Streuung der Drosselwirkung zu reduzieren, erfolgt kurbelgehäuseseitig eine Bearbeitung der Gussrippen. Hierbei wird auf grund der geringen Rippenbreite nur wenig Material zerspannt und somit die Bearbeitungszeit des Kurbelgehäuses nur geringfügig erhöht. Die Gussrippen am AGR-Kühler müssen hingegen nicht bearbeitet werden, da die Toleranzen bei Druckguss schon ausreichend genau sind.

Hierbei ist weiter von Vorteil, dass die Brennkraftmaschine äußerst kompakt gebaut ist und dass die Wärmeübertragung ohne unnötige Verrohrung äußerst effektiv erfolgen kann.

In Weiterbildung der Erfindung ist vorgesehen, dass die Kühlstrecke Turbulenzerzeuger aufweist, die für eine noch bessere Wärmeübertragung Sorge tragen.

In weiterer Ausgestaltung der Erfindung sind in die Kanäle Blenden und/ oder Drosseleinrichtungen eingesetzt. Mit diesen Bauteilen kann eine individuelle Abstimmung der den einzelnen Zylindereinheiten zugeführten Abgasmenge erfolgen.

Mit Hilfe dieser Lösung werden die Leckageverluste auf ein Minimum reduziert. Die Strömungsgeschwindigkeiten und somit die Kühlwirkung am AGR-Kühler werden im Umkehrschluss deutlich erhöht bzw. verbessert.

Wird im Weiteren die rückseitige Gussrippe im Kurbelgehäuse über die gesamte Länge des AGR-Kühlers durchgezogen, kann auch auf das zusätzliche Leitblech an der Rückseite des AGR-Kühlers verzichtet werden. Dies führt zu einer Kostenersparnis, welche die Mehrkosten für die Bearbeitung der Rippen am Kurbelgehäuse ausgleichen dürfte.

Aufgrund der Möglichkeit, die Bearbeitung am Kurbelgehäuse jederzeit anpassen zu können, kann zudem auf Designänderungen des AGR-Kühlers jederzeit reagiert werden.

Weitere vorteilhafte Ausgestaltungen der Erfindung sind der Zeichnungsbeschreibung zu entnehmen, in der in den Figuren dargestellte Ausführungsbeispiele der Erfindung näher beschrieben sind. Es zeigen:
- Fig. 1: eine perspektivische Ansicht eines Kurbelgehäuses mit in das Kurbelgehäuse integriertem Kühlgehäuse eines Abgaskühlers einer Abgasrückführeinrichtung,
- Fig. 2: eine Seitenansicht des AGR-Kühlers gemäß Fig. 1,
- Fig. 3: einen Schnitt durch das Kurbelgehäuse aus Fig. 1 mit einem AGR-Kühlgehäuse, dessen Grundkörper Bestandteil des Kurbelgehäuses ist und wobei der Grundkörper von einem Deckel abgedeckt ist,
- Fig. 4: einen Schnitt durch das Kurbelgehäuse entlang der Linie C-C aus Fig. 3.

Fig. 1 zeigt den Zylinderblock des Kurbelgehäuses 1 der Brennkraftmaschine, die an ihrer Längsseite eine ebene Flanschfläche zur Aufnahme eines AGR-Kühlers 2 aufweist. In der Dichtungsebene der ebenen Flanschfläche ist eine Kühlmitteleintrittsöffnung 9 im Bereich einer Stirnseite der Brennkraftmaschine vorgesehen, die Kühlmittel zum Kühler 2 durchlässt. In unmittelbarer Nachbarschaft zur Kühlmitteleintrittsöffnung 9 ist die Kühlmittelaustrittsöffnung des Kühlers 2 ebenfalls in der Dichtungsebene der Flanschfläche angeordnet. In der Dichtungsebene der ebenen Flanschfläche ist ein Abgaseintritt zum Kühler im Bereich der anderen Stirnseite der Brennkraftmaschine vorgesehen, der Abgase zum Kühler durchlässt. In unmittelbarer Nachbarschaft des Abgaseintritts zum Kühler ist die integrierte Abgasdurchführung vom Kühler ebenfalls in der Dichtungsebene der Flanschfläche angeordnet. Die interne Kühlstrecke weist nasenförmige Erhebungen auf, die im Zusammenwirken mit Strömungsleitelementen, die am Kühlergehäuse angeordnet sind, für eine turbulente Strömung des um bzw. zwischen den nasenförmigen Erhebungen und den Strömungsleitelementen strömenden Kühlmittels sorgt. Die Gasentnahme aus dem Zylinderkopf erfolgt über die Kanalführung im Zylinderkopf und wird über die Abgaseintrittsöffnung mittels einer Kanalverbindung im Kurbelgehäuse 1 an den Abgaseintritt weitergeleitet. Das den Abgaseintritt erreichende Abgas wird in die Leitungsführung AGR im Kühler 2 eingeleitet und gibt dort seine Abwärme ans Kühlmittel ab. Anschließend verlässt das abgekühlte Abgas den Kühler 2 mittels der integrierten Abgasdurchführung durch das Kurbelgehäuse 1 in Richtung der Abgasanlage. Zwischen AGR-Kühler 2 und der Flanschfläche ist eine Dichtung angeordnet.

In Fig. 2 ist eine Seitenansicht des im Kurbelgehäuse 1 montierten AGR-Kühlers 2 gemäß Fig. 1 zu sehen. Dieser AGR-Kühler 2 weist eine Kühlerkassette 3 auf, die als Kühlstrecke wirkt. Zur Unterstützung der Kühlstrecke der Kühlerkassette 3 ist ein Leitblech 4 angeordnet. Aus Sicht der Abgasströmungsrichtung ist vor und nach der Kühlerkassette 3 je ein Eintrittsstutzen 5 und ein Austrittsstutzen 8 angeordnet. Der Eintrittsstutzen 5 des AGR-Kühlers 2 weist eine Gussfinne 6 auf. Der Austrittstutzen 8 des AGR-Kühlers 2 weist eine Gussfinne 6 auf.

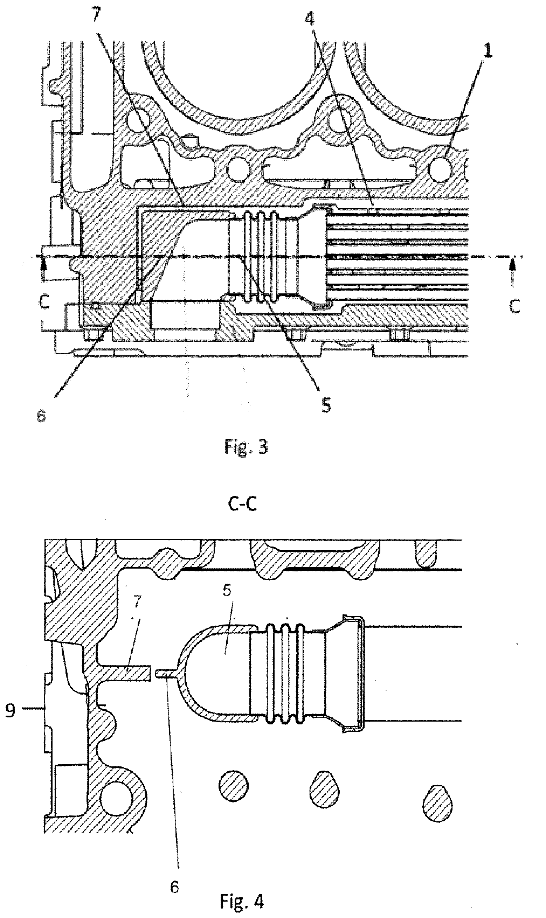

Fig. 3 stellt einen Schnitt durch das Kurbelgehäuse 1 aus Fig. 1 mit einem AGR-Kühler 2 in einem Kühlgehäuse dar, dessen Grundkörper Bestandteil des Kurbelgehäuses 1 ist und wobei der Grundkörper von einem Deckel abgedeckt ist, der an das Kurbelgehäuse 1 angeschraubt ist. An der vom Kühlwasser der Brennkraftmaschine umströmten Kühlstrecke des AGR-Kühlers 2 ist das ebenfalls vom Kühlwasser umströmte Leitblech 4 angeordnet. Am Eintrittsstutzen des AGR-Kühlers 2 ist die vom Kühlwasser der Brennkraftmaschine umströmte Gussfinne 6 zu sehen. Gegenüber der Gussfinne 6 des AGR-Kühlers 2 ist die am Kurbelgehäuse 1 der Brennkraftmaschine angeordnete Gussrippe 7 zu sehen. Die Anordnung von Gussfinne 6 zu Gussrippe 7 führt zu einem Spalt im Kühlwasser geführten Bereich des AGR-Kühlers 2 im verbauten Zustand, der Einfluss auf die Strömungsgeschwindigkeit des Kühlwassers hat.

In Fig. 4 wird einen Schnitt durch das Kurbelgehäuse 1 entlang der Linie C-C aus Fig. 3 gezeigt. Hier wird noch einmal deutlich, wie die Anordnung der Gussfinne 6 an dem Eintrittsstutzen 5 in Kombination mit der am Kurbelgehäuse 1 der Brennkraftmaschine angeordneten Gussrippe 7 auf die Strömungsverhältnisse des Kühlwassers nimmt.

### Bezugszeichenliste

- 1: Kurbelgehäuse
- 2: AGR-Kühler
- 3: Kühlerkassette
- 4: Leitblech
- 5: Eintrittsstutzen
- 6: Gussfinne
- 7: Gussrippe
- 8: Austrittsstutzen
- 9: Kühlmitteleintrittsöffnung

## Patentansprüche

1. Brennkraftmaschine mit einem Kurbelgehäuse (1) und einem Zylinderkopf,
umfassend wenigstens einen Zylinderblock, wenigstens eine ebene Flanschfläche zur Aufnahme wenigstens eines AGR-Kühlers (2), wenigstens einen AGR-Kühler (2), wenigstens eine Kühlmitteleintrittsöffnung (9) zum AGR-Kühler (2), wenigstens eine Kühlmittelaustrittsöffnung vom AGR-Kühler (2), wenigstens einen Abgaseintritt zum AGR-Kühler (2), wenigstens eine Abgasdurchführung vom AGR-Kühler (2) und wenigstens eine Kühlerkassette (3), die als Kühlstrecke wirkt,
wobei in einer Abgasströmungsrichtung vor der Kühlerkassette (3) ein Eintrittsstutzen (5) und hinter der Kühlerkassette (3) ein Austrittsstutzen (8) angeordnet ist,
**dadurch gekennzeichnet, dass**
der Eintrittsstutzen (5) und der Austrittstutzen (8) jeweils eine Gussfinne (6) aufweist,
wobei gegenüber den Gussfinnen (6) eine an dem Kurbelgehäuse (1) angeordnete Gussrippe (7) vorgesehen ist und wobei die Gussfinne (6) zu der Gussrippe (7) derart angeordnet ist, dass dazwischen ein Spalt in einem Kühlwasser führenden Bereich des AGR-Kühlers (2) gebildet ist, der Einfluss auf die Strömungsgeschwindigkeit des Kühlwassers hat.

2. Brennkraftmaschine nach Anspruch 1 ,
**dadurch gekennzeichnet, dass** die Kühlerkassette (3) Turbulenzerzeuger aufweist.

3. Brennkraftmaschine nach einem oder mehreren der vorherigen Ansprüche,
**dadurch gekennzeichnet, dass** die ebene Flanschfläche im Wesentlichen an einer Längsseite des Kurbelgehäuses (1) zur Aufnahme des AGR-Kühlers (2) angeordnet ist.

4. Brennkraftmaschine nach einem oder mehreren der vorherigen Ansprüche,
**dadurch gekennzeichnet, dass** die Gussfinne (6) und die Gussrippe (7) als Blenden und/oder Drosseleinrichtungen zwischen dem AGR-Kühler (2) und dem Kurbelgehäuse (1) wirken.

5. Brennkraftmaschine nach einem oder mehreren der vorherigen Ansprüche,
**dadurch gekennzeichnet, dass** die Gussrippe (7) am Kurbelgehäuse (1) sich rückseitig über eine gesamte Länge des AGR-Kühlers (2) erstreckt.

6. Verfahren zur Herstellung einer Brennkraftmaschine nach einem oder mehreren der vorherigen Ansprüche,
**dadurch gekennzeichnet,**
**dass** eine toleranzbedingte Varianz einer Breite des Spalts zwischen der Gussfinne (6) und der Gussrippe (7) nur durch eine kurbelgehäuseseitige Bearbeitung der Gussrippe (7) erfolgt.

## Claims

1. Internal combustion engine with a crankcase (1) and a cylinder head, comprising at least one cylinder block, at least one flat flange surface to receive at least one EGR cooler (2), at least one EGR cooler (2), at least one coolant inlet port (9) to the EGR cooler (2), at least one coolant outlet port from the EGR cooler (2), at least one exhaust gas inlet to the EGR cooler (2), at least one exhaust gas leadthrough from the EGR cooler (2) and at least one cooler cassette (3) acting as a cooling section,
wherein, in an exhaust flow direction, an inlet connection (5) is arranged upstream of the cooler cassette (3) and an outlet connection (8) is arranged downstream of the cooler cassette (3),
**characterized in that**
the inlet connection (5) and the outlet connection (8) each have a cast fin (6),
wherein a cast rib (7) arranged on the crankcase (1) is provided opposite the cast fins (6), and the cast fin (6) is arranged with respect to the cast rib (7) in such a way that a gap in a cooling water-conducting area of the EGR cooler (2) is formed between them, which has an influence on the flow velocity of the cooling water.

2. Internal combustion engine according to Claim 1,
**characterized in that** the cooler cassette (3) has turbulence generators.

3. Internal combustion engine according to one or more of the preceding claims,
**characterized in that** the flat flange surface is arranged substantially on a longitudinal side of the crankcase (1) for receiving the EGR cooler (2).

4. Internal combustion engine according to one or more of the preceding claims,
**characterized in that** the cast fin (6) and cast rib (7) act as orifices and/or throttle devices between the EGR cooler (2) and the crankcase (1).

5. Internal combustion engine according to one or more of the preceding claims,
**characterized in that** the cast rib (7) on the crankcase (1) extends over the entire length of the EGR cooler (2) on the rear side.

6. Method for producing an internal combustion engine according to one or more of the preceding claims,
**characterized**
**in that** a tolerance-related variance of a width of the gap between the cast fin (6) and the cast rib (7) is brought about only by machining the cast rib (7) on the crankcase side.

## Revendications

1. Moteur à combustion interne avec un carter moteur (1) et une culasse, comprenant au moins un bloccylindres, au moins une surface de bride plane pour recevoir au moins un refroidisseur EGR (2), au moins un refroidisseur EGR (2), au moins une ouverture d'entrée de fluide de refroidissement (9) vers le refroidisseur EGR (2), au moins une ouverture de sortie de fluide de refroidissement du refroidisseur EGR (2), au moins une entrée de gaz d'échappement vers le refroidisseur EGR (2), au moins un passage de gaz d'échappement du refroidisseur EGR (2) et au moins une cassette de refroidisseur (3) qui agit comme trajet de refroidissement,
dans une direction d'écoulement des gaz d'échappement, une tubulure d'entrée (5) étant agencée avant la cassette de refroidisseur (3) et une tubulure de sortie (8) après la cassette de refroidisseur (3),
**caractérisé en ce que**
la tubulure d'entrée (5) et la tubulure de sortie (8) présentent chacune une ailette en fonte (6),
une nervure en fonte (7) agencée sur le carter moteur (1) étant prévue en face des ailettes en fonte (6) et l'ailette en fonte (6) étant agencée par rapport à la nervure en fonte (7) de telle sorte qu'un interstice est formé entre elles dans une zone du refroidisseur EGR (2) guidant l'eau de refroidissement, qui a une influence sur la vitesse d'écoulement de l'eau de refroidissement.

2. Moteur à combustion interne selon la revendication 1,
**caractérisé en ce que** la cassette de refroidisseur (3) présente des générateurs de turbulence.

3. Moteur à combustion interne selon une ou plusieurs des revendications précédentes,
**caractérisé en ce que** la surface de bride plane est agencée essentiellement sur un côté longitudinal du carter moteur (1) pour recevoir le refroidisseur EGR (2).

4. Moteur à combustion interne selon une ou plusieurs des revendications précédentes,
**caractérisé en ce que** l'ailette en fonte (6) et la nervure en fonte (7) agissent comme des diaphragmes et/ou des appareils d'étranglement entre le refroidisseur EGR (2) et le carter moteur (1).

5. Moteur à combustion interne selon une ou plusieurs des revendications précédentes,
**caractérisé en ce que** l'ailette en fonte (7) sur le carter moteur (1) s'étend à l'arrière sur toute une longueur du refroidisseur EGR (2).

6. Procédé de fabrication d'un moteur à combustion interne selon une ou plusieurs des revendications précédentes,
**caractérisé en ce**
**qu'**une variation, due aux tolérances, d'une largeur de l'interstice entre l'ailette en fonte (6) et la nervure en fonte (7) n'est réalisée que par un usinage de la nervure en fonte (7) du côté du carter moteur.
